(19) **Europäisches Patentamt**
**European Patent Office**
**Office européen des brevets**

(11) **EP 3 595 114 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(51) Int Cl.:
***H02H 7/04*** *(2006.01)*  ***H02H 7/045*** *(2006.01)*
***H02H 3/28*** *(2006.01)*

(21) Anmeldenummer: **18182595.1**

(22) Anmeldetag: **10.07.2018**

(54) **VERFAHREN UND ANORDNUNG ZUM ERKENNEN EINES WINDUNGSFEHLERS IN EINEM TRANSFORMATOR AUF DER BASIS KORRESPONDIERENDER GEGENSYSTEMSTROMWERTE**

METHOD AND ARRANGEMENT FOR DETECTING A WINDING DEFECT IN A TRANSFORMER ON THE BASIS OF CORRESPONDING NEGATIVE SEQUENCE CURRENT VALUES

PROCÉDÉ ET AGENCEMENT DE DÉTECTION D'UNE ERREUR DE SPIRE DANS UN TRANSFORMATEUR SUR LA BASE DE VALEURS CORRESPONDANTES DE COURANT À SÉQUENCE INVERSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.01.2020 Patentblatt 2020/03**

(73) Patentinhaber: **Siemens Aktiengesellschaft**
**80333 München (DE)**

(72) Erfinder:
• **Mieske, Frank**
**13053 Berlin (DE)**
• **Rebizant, Waldemar**
**53-678 Wroclaw (PL)**
• **Solak, Krzysztof**
**55-330 Mrozow (PL)**
• **Schiel, Ludwig**
**10627 Berlin (DE)**
• **Wiszniewski, Andrzej**
**51-144 Wroclaw (PL)**

(56) Entgegenhaltungen:
WO-A1-2015/144235    US-A1- 2017 082 675
US-B2- 7 812 615      US-B2- 7 903 381

**Beschreibung**

Die Erfindung betrifft ein Verfahren zum Erkennen eines Windungsfehlers in einem Transformator eines elektrischen Energieversorgungsnetzes, bei dem auf der Oberspannungsseite und der Unterspannungsseite des Transformators phasenleiterbezogene Strommesswerte erfasst werden, aus den phasenleiterbezogenen Strommesswerten jeweils für die Oberspannungsseite und die Unterspannungsseite Gegensystemstromwerte bestimmt werden und ein Fehlersignal erzeugt wird, wenn unter Verwendung der Gegensystemstromwerte ein Windungsfehler in dem Transformator erkannt worden ist, wobei unter Verwendung einer Abfolge von Gegensystemstromwerten der Oberspannungsseite und einer Abfolge von zeitlich zugehörigen Gegensystemstromwerten der Unterspannungsseite eine Hilfsgröße gebildet wird, anhand der Hilfsgröße eine Entscheidung getroffen wird, ob ein Windungsfehler in dem Transformator vorliegt, und das Fehlersignal erzeugt wird, wenn ein Windungsfehler vorliegt. Die Erfindung betrifft auch eine Anordnung zur Durchführung eines solchen Verfahrens.

Der Schutz von Transformatoren in Energieversorgungsnetzen erfolgt heute mit einer Vielzahl von Schutzverfahren. Neben dem sogenannten Buchholzschutz, bei dem die Gasbildung im Transformatoröl überwacht wird, wird heutzutage vor allem der Differentialschutz eingesetzt, bei dem am Schutzobjekt ermittelte Differenzströme ausgewertet werden. Als Reserveschutz werden Überstromschutzverfahren, Erdfehlerdifferentialschutz und, je nach Leistungsgröße, auch der Impedanzschutz verwendet.

Die Fehlerarten in Transformatoren sind sehr vielfältig, da hierbei insbesondere auch interne Fehler auftreten können, die durch Kurzschlüsse zwischen den Windungen der Transformatorwicklungen hervorgerufen werden.

Windungsschlüsse können beispielsweise beim Einschalten der Transformatoren auftreten, da die auftretenden hohen Einschaltströme in den Wicklungen starke Vibrationen und damit starke mechanische Belastungen erzeugen, die zu den Windungsschlüssen führen können.

Die Erkennung von Windungsfehlern in Transformatoren erfordert einen empfindlichen Schutzmechanismus. Bei vielen der oben genannten Schutzverfahren sind interne Fehler nur schwer erkennbar, da zwar innerhalb einer kurzgeschlossenen Windung ein sehr hoher Strom fließen kann, dieser von außen aber kaum messbar ist. Somit sind Windungsfehler im Allgemeinen schwierig zu erkennen, da sie nur einen sehr kleinen Anstieg des Stromes an den Klemmen des Transformators verursachen. Der Strom an der Fehlerstelle ist wegen kurzgeschlossener Windungen hingegen sehr hoch und sehr gefährlich für die Transformatoren. Die heutzutage üblicherweise eingesetzten Schutzeinrichtungen erfassen die Leiterströme an beiden Seiten des Transformators und detektieren einen inneren Fehler durch den im Falle eines Windungsschlusses auftretenden Differenzstrom, wodurch im Allgemeinen jedoch keine ausreichende Empfindlichkeit erzielt wird, um Windungsschlüsse frühzeitig zu erkennen. Daher müssen sich bei herkömmlichen Schutzprinzipien interne Fehler in Transformatoren soweit ausweiten, dass sie von außen über den Differenzstrom oder Überströme erkennbar sind.

Aus der US Patentschrift US 7,812,615 B2 ist ein Verfahren zum Erkennen eines Windungsschlusses in einem Transformator bekannt; dieses Verfahren basiert auf der Bestimmung des Gegensystemstromes auf der Ober- und Unterspannungsseite des Transformators.

Auch aus der US Patentschrift US 7,903,381 B2 ist ein Schutzverfahren bekannt, das mit Gegensystemströmen arbeitet.

Bei den bekannten Verfahren kann bereits eine gewisse Verbesserung der Empfindlichkeit erreicht werden.

Ausgehend von einem Verfahren der eingangs genannten Art stellt liegt der Erfindung die Aufgabe zugrunde, eine noch empfindlichere Erkennung eines Windungsfehlers in einem Transformator zu ermöglichen.

Diese Aufgabe wird durch die Merkmale der unabhängigen Patentansprüche gelöst. Vorteilhafte Ausführungsformen sind in den Unteransprüchen angegeben.

Danach ist hinsichtlich des gattungsgemäßen Verfahrens erfindungsgemäß vorgesehen, dass die Hilfsgröße als Integral über das Produkt jeweils zeitlich einander zugeordneter Gegensystemstromwerte der Ober- und der Unterspanungsseite gebildet wird.

Ein besonderer Vorteil besteht darin, dass nicht nur einzelne Werte der Gegensystemströme der Ober- und Unterspannungsseite in die Auswertung hinsichtlich eines Windungsfehlers eingehen, sondern die Entscheidung unter Heranziehung einer Hilfsgröße getroffen wird, in die eine zeitliche Abfolge jeweiliger Gegensystemstromwert eingeht. Damit kann die Empfindlichkeit der Windungsfehlererkennung noch weiter gesteigert werden. Ein weiterer Vorteil des erfindungsgemäßen Verfahrens besteht darin, dass außer den phasenleiterbezogenen Strömen keinerlei zusätzliche Messgrößen benötigt werden. Phasenleiterbezogene Ströme werden üblicherweise ohnehin bei der Überwachung eines Transformators hinsichtlich Fehlern, beispielsweise bei Anwendung eines Transformatordifferentialschutzes, benötigt, so dass sie in den meisten Fällen bereits zu anderen Zwecken erfasst werden und für die Windungsfehlererkennung kein weiterer Messaufwand nötig ist.

Der Erfindung liegt die Erkenntnis zugrunde, dass sich das Integral des Produkts der Gegensystemströme besonders gut zur Unterscheidung von internen und externen Fehlern eignet und darüber hinaus eine hohe Empfindlichkeit aufweist, die auch die Erkennung lediglich kleiner interner Fehlerströme ermöglicht.

Eine rechnerisch besonders einfache Möglichkeit zur Erkennung eines Windungsfehlers besteht darin, dass zur Entscheidung über das Vorliegen eines Windungsfehlers das Vorzeichen der Hilfsgröße betrachtet wird.

Hierbei kann mit einer sehr einfachen rechnerischen Betrachtung, nämlich lediglich der Erkennung des Vorzeichens der Hilfsgröße, eine Entscheidung über das Vorliegen eines Windungsfehlers getroffen werden. Bei Betrachtung einer Hilfsgröße in Form des Integrals des Produkts der Gegensystemströme liegt bei positivem Wert des Integrals ein innerer Fehler, bei negativem ein externer Fehler vor.

Eine weitere Erhöhung der Empfindlichkeit der Fehlererkennung kann dadurch erreicht werden, dass für den Fall, dass die Hilfsgröße auf das Fehlen eines Windungsfehlers hinweist, eine Asymmetrie von phasenleiterbezogenen Differenzströmen betrachtet wird, und ein vorliegender Windungsfehler erkannt wird, wenn eine Asymmetrie vorliegt.

Auf diese Weise kann das Verfahren einerseits sehr recheneffektiv ausgeführt werden, da die Asymmetrie lediglich dann untersucht wird, wenn mit der Hilfsgröße allein kein Windungsfehler erkannt werden kann. Wird hingegen bereits bei Betrachtung der Hilfsgröße ein Windungsfehler erkannt, so muss die Asymmetriebetrachtung nicht durchgeführt werden, wodurch insgesamt auch eine schnellere Entscheidung erfolgen kann. Andererseits kann die Empfindlichkeit bei der Fehlererkennung noch weiter erhöht werden, indem die phasenleiterbezogenen Ströme hinsichtlich einer möglichen Asymmetrie näher untersucht werden.

Eine weitere vorteilhafte Ausführungsform des erfindungsgemäßen Verfahrens sieht vor, dass das Fehlersignal blockiert wird, wenn ein Einschaltvorgang im Energieversorgungsnetz oder wenn das Vorliegen eines externen Fehlers erkannt worden ist.

Auf diese Weise können einerseits Betriebszustände des Transformators, in denen sich Fehlersignale nicht mit der nötigen Zuverlässigkeit erzeugen lassen, nämlich insbesondere Einschaltvorgänge, außerhalb der Fehlerbetrachtung bleiben. Andererseits wird in solchen Fällen, in denen bereits das Vorliegen eines externen Fehlers sicher erkannt worden ist, beispielsweise durch Anwendung eines Transformatordifferentialschutzes, auf die vergleichsweise aufwändige Untersuchung hinsichtlich eines Windungsfehlers verzichtet werden.

Das beschriebene Verfahren kann ohne Weiteres bei einem Zweiwicklungstransformator eingesetzt werden. Darüber hinaus erweitert eine weitere vorteilhafte Ausführungsform die Anwendbarkeit des Verfahrens auch auf Transformatoren mit mehr als zwei Wicklungen. Danach ist vorgesehen, dass bei einem Transformator mit mehr als zwei Wicklungen zur Bildung der Hilfsgröße die Gegensystemstromwerte einer jeweiligen weiteren Wicklung entweder zu den Gegensystemstromwerten der Oberspannungsseite des Transformators oder zu den Gegensystemstromwerten der Unterspannungsseite des Transformators addiert werden.

Gemäß dieser Ausführungsform wird somit quasi zunächst ein Mehrwicklungstransformator auf einen Zweiwicklungstransformator abgebildet. Danach kann die Berechnung der Hilfsgröße wie oben für den Zweiwicklungstransformator stattfinden. Hinsichtlich der Entscheidung, welche Wicklungen des Transformators für die Bildung der Hilfsgröße zusammengefasst werden, kann gemäß einer vorteilhaften Ausführungsform des erfindungsgemäßen Verfahrens in diesem Zusammenhang vorgesehen sein, dass bei der Bildung der Hilfsgröße die Gegensystemstromwerte derjenigen Wicklungen zusammengefasst werden, in denen dieselbe Lastflussrichtung vorliegt.

Durch Betrachtung der Lastflussrichtung kann somit ein geeignetes Kriterium geschaffen werden, um den Transformator in "speisende" und "entnehmende" Wicklungen aufzuteilen. Zur Beurteilung der Lastflussrichtung kann beispielsweise das Produkt der in zwei zu vergleichenden Wicklungen fließenden Wirkströme bestimmt werden. Bei positivem Ergebnis liegt dieselbe Lastflussrichtung vor, bei negativem Ergebnis eine entgegengesetzte.

Schließlich wird es als vorteilhafte Ausführungsform des erfindungsgemäßen Verfahrens in diesem Zusammenhang auch angesehen, wenn nur solche Wicklungen des Transformators bei der Bildung der Hilfsgröße berücksichtigt werden, in denen ein Mitsystemstrom vorliegt, dessen Höhe eine Minimalschwelle überschreitet.

Auf diese Weise können Wicklungen mit keinem oder vernachlässigbar kleinem Stromfluss aus der Überprüfung ausgenommen werden.

Die oben genannte Aufgabe wird auch durch eine Anordnung zum Erkennen eines Windungsfehlers in einem Transformator eines elektrischen Energieversorgungsnetzes gelöst. Die Anordnung umfasst eine Messeinrichtung, die zur Erfassung von phasenleiterbezogenen Strommesswerten auf der Oberspannungsseite und der Unterspannungsseite des Transformators eingerichtet ist, und eine Auswerteinrichtung, die zur Bestimmung von jeweiligen Gegensystemstromwerten für die Oberspannungsseite und die Unterspannungsseite aus den phasenleiterbezogenen Strommesswerten und zur Erzeugung eines Fehlersignals eingerichtet ist, wenn unter Verwendung der Gegensystemstromwerte ein Windungsfehler in dem Transformator erkannt worden ist.

Dabei ist vorgesehen, dass die Auswerteinrichtung dazu eingerichtet ist, unter Verwendung einer Abfolge von Gegensystemstromwerten der Oberspannungsseite und einer Abfolge von zeitlich zugehörigen Gegensystemstromwerten der Unterspannungsseite eine Hilfsgröße zu bilden, anhand der Hilfsgröße eine Entscheidung zu treffen, ob ein Windungsfehler in dem Transformator vorliegt, und ein Fehlersignal zu erzeugen, wenn ein Windungsfehler vorliegt.

Erfindungsgemäß ist die Auswerteinrichtung dazu eingerichtet, die Hilfsgröße als Integral über das Produkt jeweils zeitlich einander zugeordneter Gegensystemstromwerte der Ober- und der Unterspanungsseite zu bilden.

Bei der Anordnung kann es sich zum Beispiel um ein elektrisches Schutzgerät, insbesondere ein Transformatordifferentialschutzgerät handeln, das neben anderen Schutzfunktionen auch die empfindliche Erkennung von Windungsfehlern durchführt.

Hinsichtlich der erfindungsgemäßen Anordnung gelten alle zu dem erfindungsgemäßen Verfahren voranstehend und nachfolgend gemachten Ausführungen und umgekehrt in entsprechender Weise, insbesondere ist die erfindungsgemäße Anordnung zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Anordnung wird auf die zu dem erfindungsgemäßen Verfahren beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Anordnung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Hierzu zeigen

Figuren 1-3    Beispiele von Windungsfehlern in einem Transformator;

Figur 4    ein schematisches Ausführungsbeispiel einer Anordnung zur Erkennung eines Windungsfehlers bei einem Zweiwicklungstransformator;

Figur 5    ein schematisches Ablaufdiagramm zur Erläuterung eines Ausführungsbeispiels eines Verfahrens zur Erkennung eines Windungsfehlers;

Figur 6    ein Diagramm mit beispielhaften Verläufen einer Hilfsgröße bei einem vorliegenden Windungsfehler;

Figur 7    ein Diagramm mit einem beispielhaften Verlauf einer Hilfsgröße bei einem externen Fehler;

Figur 8    ein schematisches Ausführungsbeispiel einer Anordnung zur Erkennung eines Windungsfehlers bei einem Dreiwicklungstransformator; und

Figur 9    Beispiele von Diagrammen zur Erläuterung der Zusammenfassung von Wicklungen zum Zwecke der Fehlerüberwachung.

Dabei stehen gleiche Bezugszeichen in den Figuren für identische oder vergleichbare Komponenten.

Windungsfehler in Transformatoren von Energieversorgungsnetzen stellen besondere Anforderungen an die den Transformator überwachende Schutztechnik. Zwar können nämlich innerhalb des Transformators zwischen den durch einen Windungsschluss fehlerhaft verbundenen Windungen durchaus hohe Ströme fließen. Diese sind an den äußeren Klemmen des Transformators jedoch kaum messbar und können daher mit herkömmlichen Schutzkonzepten, wie einem Differentialschutz oder einem Überstromschutz, nur schwer erkannt werden.

Windungsfehler entstehen beispielsweise durch starke mechanische Belastungen, z.B. Vibrationen, innerhalb des Transformators und durch Alterung der Isolierung zwischen den Windungen. Die zwischen den fehlerhaften Windungen fließenden hohen Ströme können zu einer lokalen Überhitzung und zu einer Ausbreitung des Fehlers im Transformator führen und sind daher durch eine den Transformator überwachende Schutzeinrichtung möglichst frühzeitig zu erkennen.

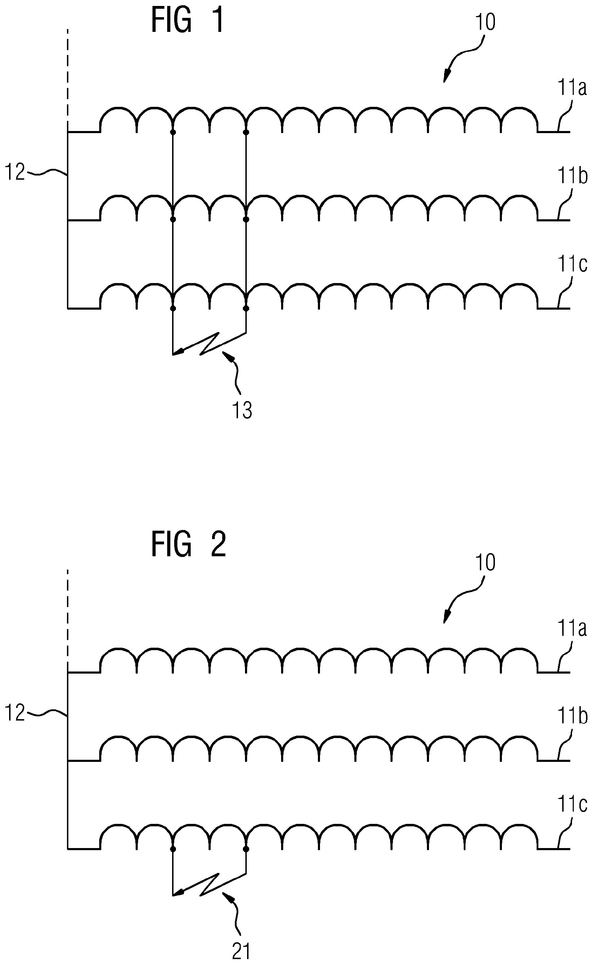

Figuren 1 bis 3 zeigen Beispiele von Windungsfehlern. Hierzu ist beispielhaft eine Wicklung 10 eines ansonsten nicht dargestellten Transformators gezeigt, bei der einzelne Phasenwicklungen bzw. parallele Stränge von Phasenwicklungen 11a, 11b, 11c mit einem gemeinsamen Sternpunkt 12 verbunden sind. Selbstverständlich kommen auch andere Schaltungskonfigurationen, z.B. eine Dreiecksschaltung, in Frage. Moderne Transformatoren besitzen darüber hinaus besonders an der Unterspannungsseite einzelne Phasenwicklungen, die durch mehrere parallele Stränge ausgeführt sind, und dem Ziel einer Reduzierung der Verlustleistung dienen.

In Figur 1 ist beispielhaft ein Windungsfehler 13 gezeigt, der als Kurzschluss an allen parallelen Strängen einer Phasenwicklung ausgebildet ist.

In Figur 2 ist beispielhaft ein Windungsfehler 21 gezeigt, der als Kurzschluss an einem einzelnen Strang einer Phasenwicklung ausgebildet ist.

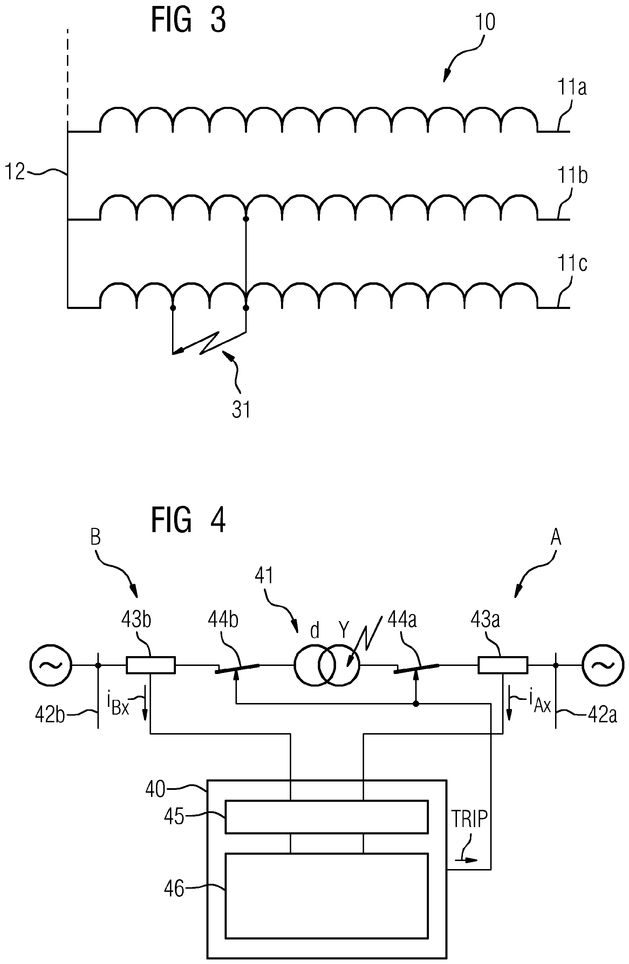

In Figur 3 ist schließlich beispielhaft ein Windungsfehler 31 gezeigt, der als Kurzschluss zwischen parallelen Strängen einer Phasenwicklung ausgebildet ist.

Insbesondere in den in Figuren 1 und 3 gezeigten Fehlerfällten sind die entstehenden Fehlerströme von außen kaum messbar.

Figur 4 zeigt eine Anordnung 40 zur empfindlichen Erkennung eines Windungsfehlers in einem lediglich schematisch angedeuteten Zweiwicklungstransformator 41. Bei dem Ausführungsbeispiel der Figur 4 ist der Transformator in Stern-DreiecksSchaltung geschaltet. Andere Konfigurationen sind selbstverständlich ebenfalls möglich. Zur Vereinfachung ist in Figur 4 eine einphasige Darstellung gezeigt. Diese steht stellvertretend für ein Mehrphasensystem, insbesondere ein Dreiphasensystem.

Der Transformator ist gemäß Figur 4 zwischen einer Sammelschiene 42a auf der Oberspannungsseite A und einer Sammelschiene 42b auf der Unterspannungsseite B vorgesehen. Vorliegend ist der Transformator in Schaltgruppe Yd11 geschaltet. Andere Schaltgruppen sind im Rahmen der Erfindung ebenfalls möglich. Mit Stromwandlern 43a und 43b werden sowohl auf der Oberspannungsseite A als auch auf der Unterspannungsseite B an den Klemmen des Transformators 41 die in den einzelnen Phasenleitern (x = 1, 2, 3) fließenden Ströme $i_{Ax}$ und $i_{Bx}$ gemessen. Die gemessenen Ströme und Spannungen werden einer Messeinrichtung 45 der Anordnung 40 zugeführt und von dieser, ggf. nach einer Vorverarbeitung, an eine Auswerteinrichtung 46 weitergegeben.

Mittels der Anordnung 40, bei der es sich z.B. um ein elektrisches Transformatordifferentialschutzgerät handeln kann, werden die erfassten phasenleiterbezogenen Ströme $i_{Ax}$, $i_{Bx}$ durch Ausführung einer oder mehrerer Hauptschutzfunktionen ausgewertet, um einen in dem Transformator vorliegenden Fehler erkennen zu können. Beispielsweise kann es sich dabei um eine Differentialschutzfunktion handeln, die - nach einer entsprechend des Umsetzungsverhältnisses und der Transformatorgruppe durchgeführten Anpassung der phasenleiterbezogenen Ströme - aus den phasenleiterbezogenen Strömen phasenleiterbezogene Differenzströme und phasenleiterbezogene Stabilisierungsströme bildet und diese hinsichtlich des Vorliegens eines internen oder eines externen Fehlers untersucht. Allerdings ist die Differentialschutzfunktion aufgrund der bei einem Windungsfehler fließenden sehr geringen Fehlerströme vergleichsweise unempfindlich gegenüber solchen Fehlern, so dass spezielle Schutzfunktionen notwendig sind, um solche Windungsfehler zuverlässig erkennen zu können.

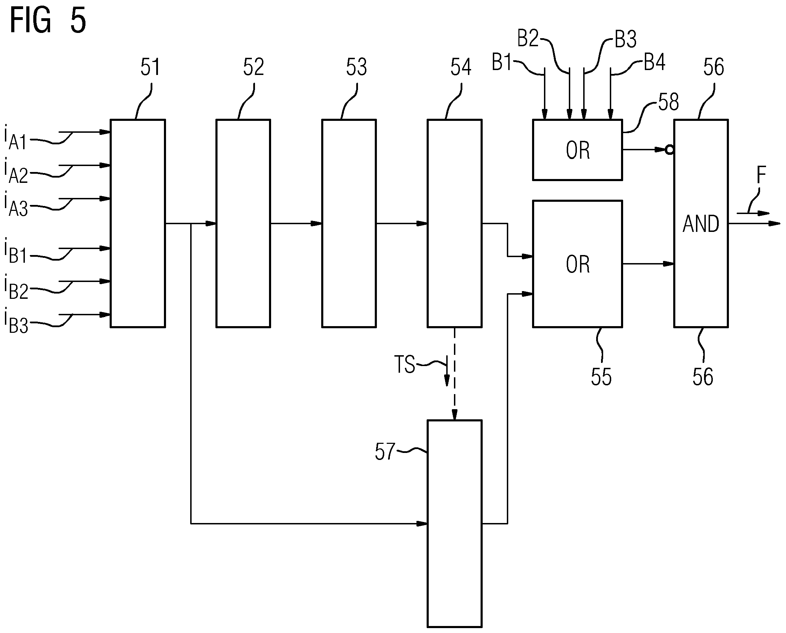

Die diesbezüglich in der Anordnung 40 ablaufenden Verfahrensschritte werden nachfolgend unter Hinzunahme der Figur 5 erläutert, die ein Ablaufschema eines Ausführungsbeispiels eines Verfahrens zur Erkennung eines Windungsfehlers zeigt. In einem ersten Schritt 51 werden mittels der Messeinrichtung 45 der Anordnung 40 phasenleiterbezogene Ströme $i_{A1}$, $i_{A2}$, $i_{A3}$ der Oberspannungsseite A und phasenleiterbezogene Ströme $i_{B1}$, $i_{B2}$, $i_{B3}$ der Unterspannungsseite B erfasst. Die Messung erfolgt an beiden Seiten des Transformators 41 (Oberspannungs- und Unterspannungsseite) mittels geeigneter Stromsensoren 43a, 43b. Mit der Messeinrichtung kann zudem eine Vorverarbeitung der erfassten phasenleiterbezogenen Strommesswerte stattfinden. Je Seite des Transformators 41 erfolgt dabei eine auf das Umsetzungsverhältnis des Transformators angepasste Betragskorrektur und, wenn erforderlich, eine Schaltgruppenkorrektur der phasenleiterbezogenen Ströme. Dieser Schritt 51 wird auch für herkömmliche Transformatordifferentialschutz-Verfahren durchgeführt, so dass hierbei kein zusätzlicher Aufwand erforderlich ist. Außerdem kann in Schritt 51 eine Berechnung der Differenzströme für spätere Auswertungen in Schritt 57 erfolgen.

Im optionalen Schritt 52 findet eine Filterung der gemessenen und abgetasteten Strommesswerte statt. Dabei werden diese in orthogonale Komponenten (Cosinus und Sinus) zerlegt. Die Ausgangssignale $i_{Ax}^{sin}$, $i_{Ax}^{cos}$ und $i_{Bx}^{sin}$, $i_{Bx}^{cos}$ der Filter sind in den nachfolgenden Gleichungen [1] bis [4] angegeben.

Für die Oberspannungsseite A gilt:

$$i_{Ax}^{cos}(n) = \frac{2}{N}\sum_{k=0}^{N-1} i_{Ax}(n-k)cos\left[\left(\frac{N-1}{2}-k\right)\omega_1\right] \qquad (1)$$

$$i_{Ax}^{sin}(n) = \frac{2}{N}\sum_{k=0}^{N-1} i_{Ax}(n-k)sin\left[\left(\frac{N-1}{2}-k\right)\omega_1\right] \qquad (2)$$

Für die Unterspannungsseite B gilt:

$$i_{Bx}^{cos}(n) = \frac{2}{N}\sum_{k=0}^{N-1} i_{Bx}(n-k)cos\left[\left(\frac{N-1}{2}-k\right)\omega_1\right] \qquad (3)$$

$$i_{Bx}^{sin}(n) = \frac{2}{N}\sum_{k=0}^{N-1} i_{Bx}(n-k)sin\left[\left(\frac{N-1}{2}-k\right)\omega_1\right] \qquad (4)$$

Hierbei bedeuten:

$i_{Ax}^{cos}$ : Cosinuskomponente des gefilterten Stroms des Phasenleiters x der Oberspannungsseite A;
$i_{Ax}^{sin}$ : Sinuskomponente des gefilterten Stroms des Phasenleiters x der Oberspannungsseite A;
$i_{Bx}^{cos}$ : Cosinuskomponente des gefilterten Stroms des Phasenleiters x der Unterspannungsseite B;
$i_{Bx}^{sin}$ : Sinuskomponente des gefilterten Stroms des Phasenleiters x der Unterspannungsseite B;
$i_{Ax}$: phasenleiterbezogener Strom der Oberspannungsseite A;
$i_{Bx}$: phasenleiterbezogener Strom der Unterspannungsseite B;
x: Index des Phasenleiters (x= 1,2,3);
n: Nummer des Abtastwertes;
$\omega_1$: Abtastfrequenzbezogene Kreisfrequenz der Grundschwingung $\omega_1 = 2\pi f_1/f_s$;
$f_1$: Frequenz der Grundschwingung (z.B. $f_1$ = 50Hz);
$f_s$: Abtastfrequenz (z.B. $f_s$ = 1000Hz);
N: Länge des Messfensters N = $f_s/f_1$.

In einem folgenden Schritt 53 werden Gegensystemstromwerte $i_{2A}$ und $i_{2B}$ für die Ober- und die Unterspannungsseite des Transformators berechnet. Dazu können beispielsweise die in Schritt 52 bestimmten gefilterten Stromwerte $i_{Ax}^{sin}$, $i_{Ax}^{cos}$ und $i_{Bx}^{sin}$, $i_{Bx}^{cos}$ verwendet werden.

Die Gegensystemstromwerte $i_{2A}$ und $i_{2B}$ können beispielsweise wie folgt berechnet werden:

$$i_{2A}(n) = \frac{1}{3}\begin{bmatrix} 1 & a_R & a_R \end{bmatrix}\begin{bmatrix} i_{A1}^{cos}(n) \\ i_{A2}^{cos}(n) \\ i_{A3}^{cos}(n) \end{bmatrix} - \frac{1}{3}\begin{bmatrix} 0 & a_I & a_I \end{bmatrix}\begin{bmatrix} i_{A1}^{sin}(n) \\ i_{A2}^{sin}(n) \\ i_{A3}^{sin}(n) \end{bmatrix} \tag{5}$$

$$i_{2B}(n) = \frac{1}{3}\begin{bmatrix} 1 & a_R & a_R \end{bmatrix}\begin{bmatrix} i_{B1}^{cos}(n) \\ i_{B2}^{cos}(n) \\ i_{B3}^{cos}(n) \end{bmatrix} - \frac{1}{3}\begin{bmatrix} 0 & a_I & a_I \end{bmatrix}\begin{bmatrix} i_{B1}^{sin}(n) \\ i_{B2}^{sin}(n) \\ i_{B3}^{sin}(n) \end{bmatrix} \tag{6}$$

mit: $a_R$ = -0,5 und $a_I = \sqrt{3}/2$.

In einem nachfolgenden Schritt 54 wird unter Verwendung einer zeitlichen Abfolge von Gegensystemstromwerten i2A und i2B eine Hilfsgröße W berechnet. Die Hilfsgröße W kann dabei vorteilhafterweise als Integral des Produkts der jeweiligen Gegensystemstromwerte gebildet werden:

$$W = \frac{2}{T_1}\int_{t-T_1}^{t} i_{2A}i_{2B}\,dt \tag{7}$$

mit $T_1$ = Periodendauer.

Die numerische Integration über eine komplette Periode $T_1$ kann hierbei beispielsweise wie folgt erfolgen:

$$M(n) = i_{2A}(n) \cdot i_{2B}(n) \tag{8}$$

$$W(n) = \frac{1}{N}\sum_{k=0}^{N-1}[M(n-k) + M(n-k-1)] \tag{9}$$

Alternativ kann mit M(n) aus Gleichung [8] auch eine iterative Bestimmung durchgeführt werden:

$$F(n) = F(n-1) + \frac{T_s}{2}\big(M(n) + M(n-1)\big) \tag{11}$$

$$W(n) = \frac{2}{T_1} F(n) \tag{12}$$

Unter der Annahme, dass die Gegensystemströme $i_{2A}$ und $i_{2B}$ sich darstellen lassen als:

$$i_{2A} = I_{2A} sin(\omega t) \tag{13}$$

$$i_{2B} = I_{2B} sin(\omega t - \varphi) \tag{14}$$

entspricht der Wert der Hilfsgröße W dem Produkt $I_{2A}.I_{2B}.cos(\varphi)$, das heißt, der Wert des Integrals W ist abhängig vom Betrag $I_{2A}$, $I_{2B}$ der Gegensystemströme und dem Winkel $\varphi$. Der Wert der Hilfsgröße W ist somit positiv bei inneren Fehlern und negativ bei externen Fehlern. Damit kann mittels der Hilfsgröße W zuverlässig zwischen internen Windungsfehlern und externen Fehlern unterschieden werden.

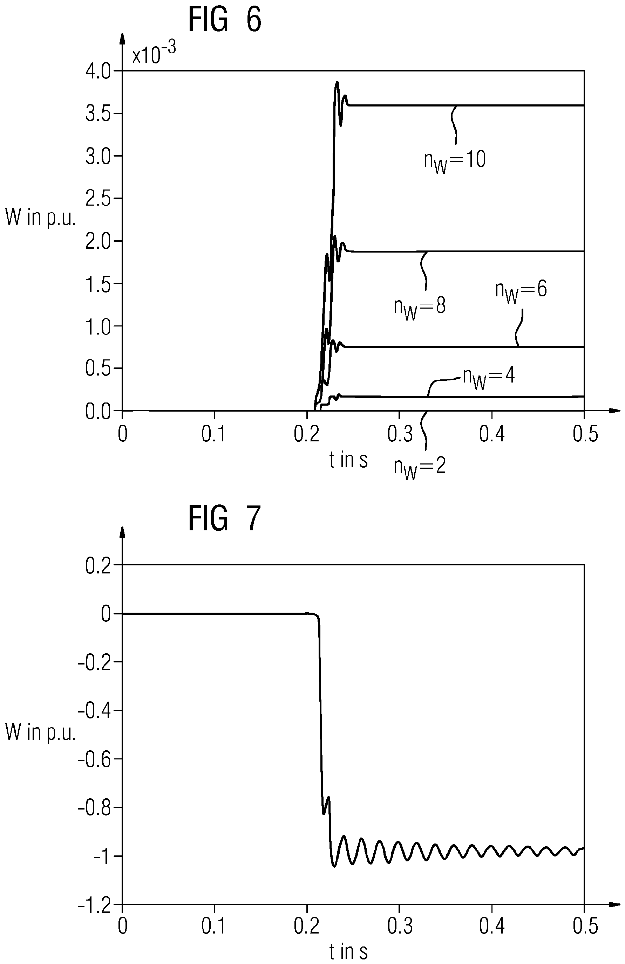

In Figur 6 sind diesbezüglich in einem Diagramm für einen internen Windungsfehler verschiedene Verläufe der Hilfsgröße W über der Zeit aufgetragen. Man erkennt beim Fehlereintritt (t > 0,2s) einen Anstieg der Hilfsgröße W in positiver Richtung. Die Höhe des Anstiegs nimmt mit zunehmender Anzahl $n_w$ kurzgeschlossener Windungen zu.

In Figur 7 ist dagegen der Verlauf der Hilfsgröße W über der Zeit bei einem externen Fehler gezeigt. Man erkennt deutlich den signifikanten Anstieg der Hilfsgröße W in negativer Richtung nach Eintritt des Fehlers (t > 0,2s).

Sofern in Schritt 54 durch Betrachtung des Vorzeichens der Hilfsgröße W ein interner Fehler erkannt worden ist, wird ein diesbezügliches Anregesignal an ein ODER-Glied 55 abgegeben.

Um die Windungsfehlererkennung noch empfindlicher und damit zuverlässiger auszugestalten, kann gemäß einem optionalen zusätzlichen Schritt 57 eine eingehendere Analyse des Betriebszustands des Transformators 41 erfolgen. Schritt 57 wird nur dann ausgeführt, wenn die Betrachtung der Hilfsgröße W in Schritt 54 zu dem Ergebnis geführt hat, dass kein Fehler vorliegt. In diesem Fall wird über ein Triggersignal TS die zusätzliche Prüfung in Schritt 57 aktiviert.

In Schritt 57 werden empfindliche Fehlerindikatoren aus den Phasendifferenzströmen berechnet, anhand deren sich eine Asymmetrie der phasenleiterbezogenen Ströme feststellen lässt. Schritt 57 wird durchgeführt, wenn in Schritt 54 kein Fehler erkannt worden ist. Die Analyse gemäß Schritt 57 basiert vorzugsweise auf den Differenzströmen $I_{\Delta a}$, $I_{\Delta b}$, $I_{\Delta c}$ der Phasenleiter 1, 2 und 3.

Die Beziehung zwischen den Differenzströmen $I_{\Delta a}$, $I_{\Delta b}$, $I_{\Delta c}$ und den Symmetrischen Komponenten (Null-, Mit- und Gegensystemstrom) können wie folgt beschrieben werden:

$$I_{\Delta a} = I_{\Delta 0} + I_{\Delta 1} + I_{\Delta 2} \tag{15}$$

$$I_{\Delta b} = I_{\Delta 0} + a^2 I_{\Delta 1} + a I_{\Delta 2} \tag{16}$$

$$I_{\Delta c} = I_{\Delta 0} + a I_{\Delta 1} + a^2 I_{\Delta 2} \tag{17}$$

Multipliziert man die Gleichungen [15] - [17] mit dem Operator a ergibt sich:

$$a I_{\Delta a} = a I_{\Delta 0} + a I_{\Delta 1} + a I_{\Delta 2} \tag{18}$$

$$a I_{\Delta b} = a I_{\Delta 0} + I_{\Delta 1} + a^2 I_{\Delta 2} \tag{19}$$

$$a I_{\Delta c} = a I_{\Delta 0} + a^2 I_{\Delta 1} + I_{\Delta 2} \tag{20}$$

Durch Subtraktion und Umformung von [15] - [20] ergeben sich Indikatorsignale $\Delta A$, $\Delta B$ und $\Delta C$:

$$\Delta A = I_{\Delta a} - a I_{\Delta b} = I_{\Delta 0}(1-a) + a I_{\Delta 2}(1-a^2) \qquad (21)$$

$$\Delta B = I_{\Delta b} - a I_{\Delta c} = I_{\Delta 0}(1-a) + a I_{\Delta 2}(a-1) \qquad (22)$$

$$\Delta C = I_{\Delta c} - a I_{\Delta a} = I_{\Delta 0}(1-a) + a I_{\Delta 2}(a^2-a) \qquad (23)$$

Die Indikatorsignale $\Delta A$, $\Delta B$ und $\Delta C$ gemäß den Gleichungen [21] - [23] kombinieren somit das Null- und das Gegensystem miteinander und sind Indikatoren für das Vorliegen asymmetrischer Fehler. Für eine phasenunabhängige Fehlererkennung werden nur zwei Werte benötigt, zum Beispiel $\Delta A$ und $\Delta B$. Ein innerer Windungsfehler liegt dann vor wenn:

$\Delta A > DI_{n1}$ und $\Delta B > DI_{n1}$ oder
$\Delta A > DI_{n1}$ und $AC > DI_{n1}$ oder
$\Delta B > DI_{n1}$ und $\Delta C > DI_{n1}$.

Hierbei steht $I_{n1}$ für den Nennstrom im Energieversorgungsnetz. D gibt einen vorgebbaren Empfindlichkeitsfaktor an und kann beispielsweise als D = 0,01 gewählt werden. Ein besonderer Vorteil bei der Bestimmung der Indikatorsignale $\Delta A$, $\Delta B$ und $\Delta C$ liegt darin, dass lediglich die Phasendifferenzströme $I\Delta a$, $I\Delta b$, $I\Delta c$ benötigt werden. Es ist hingegen nicht notwendig, die Gegen- und Nullsystemkomponenten der Ströme explizit zu berechnen.

Wird in Schritt 57 anhand der Indikatorsignale $\Delta A$, $\Delta B$ und $\Delta C$ das Vorliegen eines Fehlers erkannt, so wird ein entsprechendes Anregesignal an das ODER-Glied 55 abgegeben.

Das ODER-Glied 55 gibt ausgangsseitig ein Anregesignal an ein UND-Glied 56 ab, wenn mindestens eines der Anregesignale der Schritte 54 oder 57 eingangsseitig anliegt.

Optional kann das Verfahren zu Erkennung eines Windungsfehlers dadurch zuverlässiger ausgestaltet werden, indem bestimmte Blockierbedingungen in die Auswertung einbezogen werden. Um eine falsche Auslösung des Schutzes bei besonderen Betriebs- und Netzzuständen zu vermeiden, werden verschiedene Blockiersignale $B_1$ - $B_4$ verwendet. Mit einem ODER-Glied 58 wird geprüft, ob mindestens eines der Blockiersignale $B_1$ - $B_4$ ansteht. Bei Vorliegen dieser Signale soll eine Auslösung des Windungsfehlerschutzes insbesondere bei Transformatoreinschaltungen, Übererregung sowie externen Fehlern verhindert werden. Der Windungsfehlerschutz löst beispielsweise nur dann aus, wenn der übergeordnete Differentialschutz keine Reaktion zeigt. In Fällen mit starken Strömen ist der Differentialschutz ausreichend für eine Fehlerklärung. Der empfindliche Windungsfehlerschutz wird dann blockiert.

Konkret können beispielsweise die folgenden Blockiersignale verwendet werden:
Blockiersignal B1 (Einschaltstromblockierung): Hier wird die Einschaltstromblockierung der übergeordneten Differentialschutzfunktion genutzt. Wenn ein Einschaltvorgang erkannt wird ("Inrush-Detection"), wird das Blockiersignal $B_1$ erzeugt. Ein Einschaltvorgang kann beispielsweise durch Überwachung des Anteils 2. Harmonischer oder das CWA-Verfahren (Current Waveform Analysis) erkannt werden.

Blockiersignal $B_2$ (Blockierung bei Übererregung): Hier wird ebenfalls die Übererregungs-Blockierung der übergeordneten Differentialschutzfunktion genutzt. Wenn eine Übererregung erkannt wird, wird das Blockiersignal $B_2$ erzeugt. Eine Erkennung der Übererregung kann beispielsweise anhand des Anteils 5. Harmonischer erfolgen.

Blockiersignal $B_3$ (Blockierung bei externen Fehlern): Das Blockiersignal $B_3$ wird erzeugt, wenn ein externer Fehler (außerhalb des Transformators liegender Fehler) erkannt worden ist. Die Erkennung eines externen Fehlers findet üblicherweise durch die übergeordnete Differentialschutzfunktion statt.

Blockiersignal $B_4$ (Blockierung durch die Messwertüberwachung): Hier wird die Messkette der Anordnung 40 überwacht. Wird eine Fehlfunktion innerhalb der Messkette der Anordnung erkannt, so wird das Blockiersignal $B_4$ erzeugt.

Sofern an dem ODER-Glied 58 mindestens eines dieser Blockiersignale $B_1$ - $B_4$ eine entsprechende Blockierbedingung angibt, wird von dem ODER-Glied ausgangsseitig ein Fehlerblockiersignal erzeugt und an einen invertierten Eingang des UND-Gliedes 56 weitergegeben.

Wenn an dem UND-Glied das Anregesignal von dem ODER-Glied 55 anliegt (entweder durch Schritt 54 oder durch Schritt 57 wurde ein Windungsfehler erkannt) und gleichzeitig das Fehlerblockiersignal des ODER-Glieds 58 fehlt (keine der Blockierbedingungen liegt vor), so wird von dem UND-Glied 56 ausgangsseitig ein Fehlersignal F erzeugt, das einen Windungsfehler angibt. Das Fehlersignal F kann von der Anordnung 40 (vgl. Figur 4) dazu verwendet werden, ein Ausschaltsignal TRIP abzugeben, um den Transformator 41 begrenzende Schalteinrichtungen 44a, 44b zum Öffnen ihrer Schaltkontakte zu veranlassen, um so den Transformator 41 vom restlichen Energieversorgungsnetz abzutrennen.

Besondere Vorteile des im Zusammenhang mit Figur 5 beschriebenen Verfahrens bestehen darin, dass keine zusätzlichen Messgrößen benötigt werden, als die für den TransformatorDifferentialschutz ohnehin notwendigen phasenleiterbezogenen Strommesswerte. Der empfindliche Windungsfehlerschutz kann als Bestandteil, z.B. in Form einer separaten Stufe, des Transformator-Differentialschutzes durchgeführt werden und auf dessen Messwerte sowie etwaige Blockiersignale zurückgreifen. Der Windungsfehlerschutz arbeitet vor allem bei kleinen Fehlerströmen. Ist die Fehlersituation - z.B. aufgrund hoher Fehlerströme - hingegen eindeutig und wird vom übergeordneten Differentialschutz erkannt, dann wird der Windungsfehlerschutz blockiert. Dies erhöht die Sicherheit bei externen Fehlern. Das beschriebene Verfahren bietet eine empfindliche Erkennung von Windungsfehlern und ist aufgrund der Einbeziehung von Blockierbedingungen stabil bei Betriebs- und Fehlervorgängen im Netz, wie Einschaltungen, Übererregung, Lastsprüngen und Fehler im Netz.

Die im Zusammenhang mit Figur 5 beschriebene Vorgehensweise wurde voranstehend für den Fall eines Zweiwicklungstransformators beschrieben. In Hochspannungsübertragungsnetzen und Mittelspannungsverteilnetzen werden außerdem jedoch häufig Dreiwicklungstransformatoren verwendet. Für Spezialfälle, wie Konvertertransformatoren werden zudem Vierwicklungs- und Fünfwicklungstransformatoren verwendet. In 1,5 Leistungsschalterapplikationen an einem Transformator gibt es an einer Seite mehr als eine Strommessstelle. Daher besteht der Bedarf, das hier vorgeschlagene und voranstehend im Zusammenhang mit Figur 5 beschriebene Verfahren auf solche Schutzobjekte (Mehrwicklungstransformatoren) auszudehnen und damit das Anwendungsgebiet des empfindlichen Windungsfehlerschutzes zu vergrößern.

Die voranstehend beschriebene Methode basiert auf einer Hilfsgröße W, die vorzugsweise als Integral über das Produkt der Gegensystemströme $i_{2A}$ der Oberspannungsseite A des Transformators und $i_{2B}$ der Unterspannungsseite B des Transformatorens über eine Netzperiode nach der Gleichung [7] gebildet wird. Bei einem Windungsfehler innerhalb des Transformators ergibt sich ein positiver Wert der Hilfsgröße W; dagegen ergeben sich bei allen externen Fehlern negative Werte der Hilfsgröße W. Somit kann wie beschrieben prinzipiell durch eine einfache Betrachtung des Vorzeichens (z.B. durch Schwellwertvergleich) ein Transformatorwindungsschluss erkannt werden.

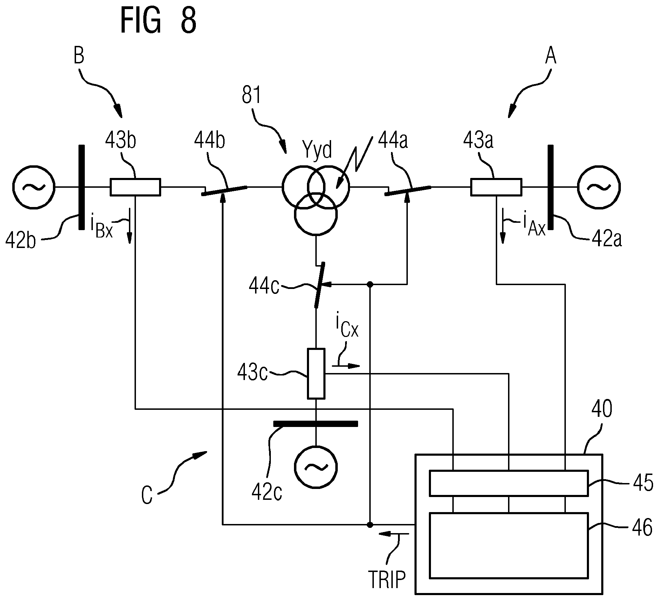

Figur 8 zeigt beispielhaft einen Mehrwicklungstransformator 81 in Form eines Dreiwicklungstransformators. Zusätzlich zu den bereits in Figur 4 beschriebenen Elementen umfasst die Darstellung gemäß Figur 8 eine dritte Sammelschiene 42c auf der Seite C des Transformators 81, einen dritten Stromwandler 43c zum Erfassen phasenleiterbezogener Strommesswerte $i_{Cx}$ der Seite C, und eine Schalteinrichtung 44c. Die Anordnung 40 ist gemäß Figur 8 in entsprechender Weise auch mit der Seite C des Transformators 81 verbunden, nämlich zur Erfassung der phasenleiterbezogenen Strommesswerte $i_{Cx}$ und zur Abgabe des Signals TRIP.

Bei dem Mehrwicklungstransformator 81 gemäß Figur 8 ergeben sich mehr (hier: drei) Gegensystemströme, nämlich $i_{2A}$, $i_{2B}$ und $i_{2C}$. Um das im Zusammenhang mit Figur 5 beschriebene Verfahren durchführen zu können, müssen die drei Gegensystemströme zur Bildung der Hilfsgröße W auf zwei Gegensystemströme reduziert werden. Dafür ist eine Zusammenfassung der Ströme von zwei Wicklungen durch Summation notwendig. Hierfür kommen mehrere Möglichkeiten in Betracht. Für den Dreiwicklungstransformator 81 der Figur 8 könnte die Summation gemäß der folgenden Tabelle prinzipiell in drei Varianten realisiert werden:

|  | Variante 1 | Variante 2 | Variante 3 |
|---|---|---|---|
| $i_2$ Seite 1 | $i_{2A}$ | $i_{2B}$ | $i_{2C}$ |
| $i_2$ Seite 2 | $i_{2B} + i_{2C}$ | $i_{2A} + i_{2C}$ | $i_{2A} + i_{2B}$ |

Generell gilt, dass mit steigender Anzahl N von Wicklungen auch mehr mögliche Varianten in Betracht gezogen werden müssen:

$$n_{Varianten} = \frac{N!}{(N-2)! \cdot 2}$$

Bei der Analyse der in der obigen Tabelle dargestellten drei Summationsvarianten für verschiedene externe Fehler und Windungsschlüsse ergaben sich folgende Schlussfolgerungen:

- eine statische Wahl der Summationsvariante unabhängig von der Betrachtung der Richtung des tatsächlichen Last- bzw. Kurzschlussflusses hat einen erheblichen Einfluss auf den Betrag der Hilfsgröße W;

- eine vordefinierte Summationsvariante auf Basis der Transformatorendaten kann nicht ermittelt werden, da die Richtungen der Last- bzw. Kurzschlussflüsse sich im elektrischen Energienetz ändern.

Vorliegend wird daher vorgeschlagen, zur Reduzierung der Gegensystemströme eines Mehrwicklungstransformators auf zwei Gegensystemströme zur Bildung der Hilfsgröße W dynamisch aufgrund der aktuellen Last- bzw. Kurzschlussströme im Energieversorgungsnetz durchzuführen. Beispielsweise kann die Lastflussrichtung durch Auswertung der Mitsystemintegrale W1 ausgehend von einer Referenzwicklung ermittelt werden:

$$W1 = \frac{2}{T_1} \int_{t-T_1}^{t} i_{1R} \cdot i_{1V} \, dt \qquad (23)$$

mit

$i_{1R}$ : Mitsystemstrom der Referenzseite R;
$i_{1V}$ : Mitsystemstrom der zur Prüfung der Lastflussrichtung ausgewählten Vergleichsseite

Die Berechnung des Mitsystemintegrals W1 gliedert sich dabei in folgende Schritte:

Schritt 1: Erfassung der Ströme aller Seiten des Transformators und Durchführung einer Betrags- und Schaltgruppenkorrektur. Dieser Schritt wird wie oben beschrieben ohnehin für die Erkennung eines Windungsfehlers durchgeführt.

Schritt 2: Zur Vorbereitung der Mitsystemstromberechnung können die gemessenen und abgetasteten Werte der Ströme gefiltert werden. Sie werden dabei in orthogonale Komponenten (Cosinus und Sinus) zerlegt. Die Ausgangssignale der Filter $i_{Rx}^{sin}$, $i_{Rx}^{cos}$ für die als Referenzseite ausgewählte Seite R und $i_{Vx}^{sin}$, $i_{Vx}^{cos}$ die als Vergleichsseite ausgewählte Seite V sind hierbei:

$$i_{Rx}^{cos}(n) = \frac{2}{N} \sum_{k=0}^{N-1} i_{Rx}(n-k) cos\left[\left(\frac{N-1}{2} - k\right)\omega_1\right] \qquad (24)$$

$$i_{Rx}^{sin}(n) = \frac{2}{N} \sum_{k=0}^{N-1} i_{Rx}(n-k) sin\left[\left(\frac{N-1}{2} - k\right)\omega_1\right] \qquad (25)$$

$$i_{Vx}^{cos}(n) = \frac{2}{N} \sum_{k=0}^{N-1} i_{Vx}(n-k) cos\left[\left(\frac{N-1}{2} - k\right)\omega_1\right] \qquad (26)$$

$$i_{Vx}^{sin}(n) = \frac{2}{N} \sum_{k=0}^{N-1} i_{Vx}(n-k) sin\left[\left(\frac{N-1}{2} - k\right)\omega_1\right] \qquad (27)$$

Hierbei bedeuten:

$i_{Rx}^{cos}$ : Cosinuskomponente des gefilterten Stroms des Phasenleiters x der Referenzseite R;

$i_{Rx}^{sin}$ : Sinuskomponente des gefilterten Stroms des Phasenleiters x der Referenzseite R;

$i_{Vx}^{cos}$ : Cosinuskomponente des gefilterten Stroms des Phasenleiters x der Vergleichsseite V;

$i_{Vx}^{sin}$ : Sinuskomponente des gefilterten Stroms des Phasenleiters x der Vergleichsseite V;

$i_{Rx}$ : phasenleiterbezogener Strom der Referenzseite R;

$i_{Vx}$ : phasenleiterbezogener Strom der Vergleichsseite V.

Schritt 3: Berechnung des Mitsystems der Ströme. Dabei werden die Mitsystemströme $i_{1R}$, $i_{1V}$ wie folgt berechnet:

$$i_{1R}(n) = \frac{1}{3}\begin{bmatrix} 1 & a_R & a_R \end{bmatrix}\begin{bmatrix} i_{R1}^{cos}(n) \\ i_{R2}^{cos}(n) \\ i_{R3}^{cos}(n) \end{bmatrix} - \frac{1}{3}\begin{bmatrix} 0 & a_I & -a_I \end{bmatrix}\begin{bmatrix} i_{R1}^{sin}(n) \\ i_{R2}^{sin}(n) \\ i_{R3}^{sin}(n) \end{bmatrix} \qquad (28)$$

$$i_{2V}(n) = \frac{1}{3}\begin{bmatrix} 1 & a_R & a_R \end{bmatrix}\begin{bmatrix} i_{V1}^{cos}(n) \\ i_{V2}^{cos}(n) \\ i_{V3}^{cos}(n) \end{bmatrix} - \frac{1}{3}\begin{bmatrix} 0 & a_I & -a_I \end{bmatrix}\begin{bmatrix} i_{V1}^{sin}(n) \\ i_{V2}^{sin}(n) \\ i_{V3}^{sin}(n) \end{bmatrix} \qquad (29)$$

Schritt 4: Die Berechnung des Integralwerts W1 der Mitsystemströme $i_{1R}$, $i_{1V}$. Der Integralwert W1 wird aus dem Produkt der Mitsystemströme $i_{1R}$, $i_{1V}$ entsprechend Gleichung [23] berechnet.

Dabei kann die Integration wie auch bei der Bildung der Hilfsgröße W (s.o.) durch numerische Integration oder durch ein iteratives Verfahren erfolgen.

Der Integralwert W1 ist positiv bei gleicher Lastflussrichtung und negativ bei inverser Lastflussrichtung. Damit kann die Lastflussrichtung zwischen der Referenzseite und der Vergleichsseite einfach bestimmt werden.

Damit gliedert sich die Vorgehensweise zur Erkennung eines Windungsfehlers bei einem Mehrwicklungstransformator mit den Seiten 1 bis N in folgende Schritte:
Der Mehrwicklungstransformator wird zunächst auf einen Zweiwicklungstransformator mit den Seiten A und B und den Gegensystemströmen $i_{2A}$ und $i_{2B}$ abgebildet. Diese Gegensystemströme werden initial zu Null gesetzt.

Danach wird eine Referenzseite R ausgewählt: Falls der Mitsystemstrom der Seite 1 eine minimale Schwelle überschreitet, wird diese Seite als Referenzseite ausgewählt und der Gegensystemstrom dieser Referenzseite wird dem Gegensystemstrom der Seite A zugewiesen.

Überschreitet der Mitsystemstrom der Seite 1 hingegen die Stromschwelle nicht, so wird diese Seite nicht berücksichtigt und als Referenzseite die nächstfolgende Seite des Transformators ausgewählt, in der ein die Schwelle überschreitender Mitsystemstrom fließt und der Gegensystemstrom dieser Referenzseite wird dem Gegensystemstrom der Seite A zugewiesen.

Nach der Auswahl der Referenzseite findet für die nachfolgenden Seiten bis Seite N zunächst jeweils eine Überprüfung statt, ob der dort vorhandene Mitsystemstrom eine minimale Schwelle überschreitet. Sofern die Schwelle überschritten wird, wird die fragliche Seite in die Bildung der Hilfsgröße W einbezogen. Dazu muss zuerst festgelegt werden, ob der Gegensystemstrom der jeweiligen in Betrachtung befindlichen Vergleichsseite der Referenzseite zugeschlagen wird. Dazu wird wie in Gleichung [23] beschrieben das Mitsystemintegral W1 mit den Mitsystemströmen der Referenzseite R und der Vergleichsseite V gebildet. In Abhängigkeit des Vorzeichens des sich ergebenden Integralwerts wird der Gegensystemstrom der jeweiligen Vergleichsseite entweder der Referenzseite (W1 ist positiv, d.h. dieselbe Lastflussrichtung liegt vor) oder der anderen Seite (W1 ist negativ, d.h. eine entgegengesetzte Lastflussrichtung liegt vor) durch Addition zugeschlagen.

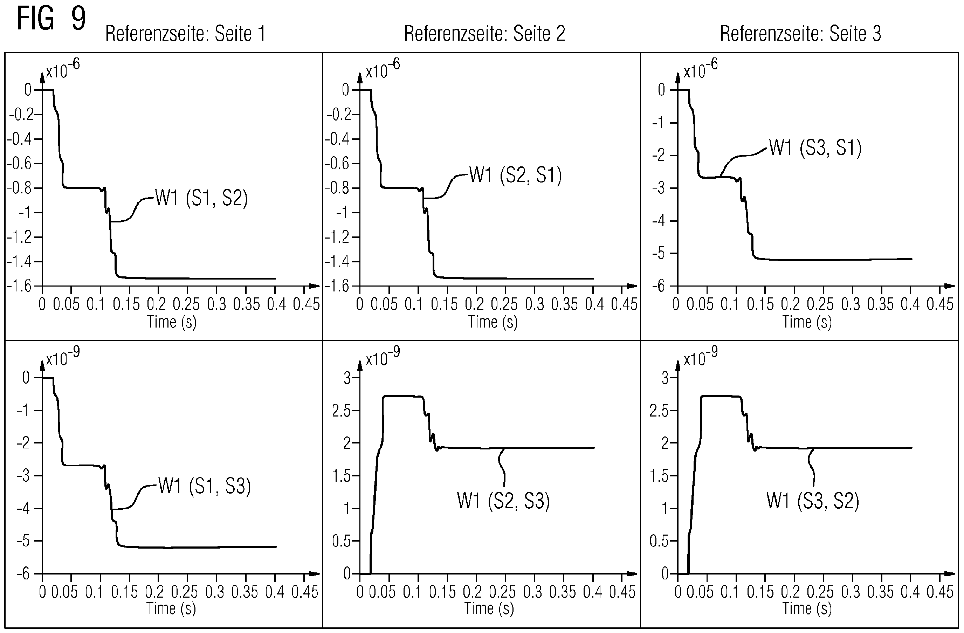

Für einen Dreiwicklungstransformator sind in Figur 9 die Mitsystemstromintegrale W1 zwischen den jeweiligen Seiten des Transformators bei einem beispielhaft angenommenen 2 poligen Leiter-Leiter Fehler in der Seite 2 dargestellt. Der Lastfluss im beispielhaft angenommenen Energieversorgungsnetz über den zu schützenden Dreiwicklungstransformator stellt sich so dar, dass in die Seite 1 mit 1 p.u. eingespeist wird und der Strom sich auf Seite 2 mit 0,75 p.u. und auf Seite 3 mit 0,25 p.u. aufteilt.

Bei Wahl der Seite 1 als Referenzseite (erste Spalte der Figur 9) zeigt sich sowohl bei Betrachtung der Seite 2 als Vergleichsseite als auch der Seite 3 als Vergleichsseite ein negativer Wert des Mitsystemstromintegrals W1. Damit sind die Lastflussrichtungen der Seiten 2 und 3 gleich und jeweils entgegengesetzt zur Lastflussrichtung der Seite 1. Bei Wahl der Seite 2 als Referenzseite (zweite Spalte der Figur 9) zeigt sich bei Betrachtung der Seite 1 als Vergleichsseite ein negativer Wert des Mitsystemstromintegrals W1, während sich bei Betrachtung der Seite 3 als Vergleichsseite ein positiver Wert des Mitsystemstromintegrals W1 ergibt. Damit sind auch bei dieser Betrachtungsweise die Lastflussrichtungen der Seiten 2 und 3 gleich und jeweils entgegengesetzt zur Lastflussrichtung der Seite 1. Bei Wahl der Seite 3 als Referenzseite (dritte Spalte der Figur 9) zeigt sich sowohl bei Betrachtung der Seite 1 als Vergleichsseite ein negativer Wert des Mitsystemstromintegrals W1, während sich bei Betrachtung der Seite 2 als Vergleichsseite ein positiver Wert des Mitsystemstromintegrals W1 ergibt. Damit sind auch bei dieser Betrachtungsweise die Lastflussrichtungen der Seiten 2 und 3 gleich und jeweils entgegengesetzt zur Lastflussrichtung der Seite 1.

Für alle drei Fälle ergibt sich somit in konsistenter Weise, dass bei Reduktion der Anzahl der Seiten auf zwei Seiten, die Gegensystemströme der Seiten 2 und 3 durch Addition zusammenzufassen sind. Damit kann die Hilfsgröße W als Integral des Produkts aus einerseits dem Gegensystemstrom der Seite 1 und andererseits der Summe der Gegensystemströme der Seiten 2 und 3 gebildet werden.

Wenn diese Vorgehensweise für alle Seiten des Transformators durchgeführt worden ist, wird die Hilfsgröße W aus den jeweils ggf. zusammengefassten Gegensystemströmen gebildet. Die Hilfsgröße wird daraufhin wie oben zur Figur 5 erläutert zur Erkennung des Vorliegens eines Windungsfehlers verwendet.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen.

**Patentansprüche**

1. Verfahren zum Erkennen eines Windungsfehlers in einem Transformator (41) eines elektrischen Energieversorgungsnetzes, bei dem

   - auf der Oberspannungsseite (A) und der Unterspannungsseite (B) des Transformators (41) phasenleiterbezogene Strommesswerte erfasst werden;
   - aus den phasenleiterbezogenen Strommesswerten jeweils für die Oberspannungsseite (A) und die Unterspannungsseite (B) Gegensystemstromwerte bestimmt werden; und
   - ein Fehlersignal erzeugt wird, wenn unter Verwendung der Gegensystemstromwerte ein Windungsfehler in dem Transformator (41) erkannt worden ist; wobei
   - unter Verwendung einer Abfolge von Gegensystemstromwerten der Oberspannungsseite (A) und einer Abfolge von zeitlich zugehörigen Gegensystemstromwerten der Unterspannungsseite (B) eine Hilfsgröße gebildet wird; und
   - anhand der Hilfsgröße eine Entscheidung getroffen wird, ob ein Windungsfehler in dem Transformator (41) vorliegt; und
   - das Fehlersignal erzeugt wird, wenn ein Windungsfehler vorliegt;
   **dadurch gekennzeichnet, dass**
   - die Hilfsgröße als Integral über das Produkt jeweils zeitlich einander zugeordneter Gegensystemstromwerte der Ober-(A) und der Unterspannungsseite (B) gebildet wird.

2. Verfahren nach Anspruch 1,
   **dadurch gekennzeichnet, dass**

   - zur Entscheidung über das Vorliegen eines Windungsfehlers das Vorzeichen der Hilfsgröße betrachtet wird.

3. Verfahren nach einem der vorangehenden Ansprüche,
   **dadurch gekennzeichnet, dass**

   - für den Fall, dass die Hilfsgröße auf das Fehlen eines Windungsfehlers hinweist, eine Asymmetrie von phasenleiterbezogenen Differenzströmen betrachtet wird; und
   - ein vorliegender Windungsfehler erkannt wird, wenn eine Asymmetrie vorliegt.

4. Verfahren nach einem der vorangehenden Ansprüche,
   **dadurch gekennzeichnet, dass**

   - das Fehlersignal blockiert wird, wenn der ein Einschaltvorgang im Energieversorgungsnetz oder wenn das Vorliegen eines externen Fehlers erkannt worden ist.

5. Verfahren nach einem der vorangehenden Ansprüche,
   **dadurch gekennzeichnet, dass**

   - bei einem Transformator (81) mit mehr als zwei Wicklungen zur Bildung der Hilfsgröße die Gegensystemstromwerte einer jeweiligen weiteren Wicklung entweder zu den Gegensystemstromwerten der Oberspannungsseite des Transformators oder zu den Gegensystemstromwerten der Unterspannungsseite des Transformators addiert werden.

6. Verfahren nach Anspruch 5,

**dadurch gekennzeichnet, dass**

- bei der Bildung der Hilfsgröße die Gegensystemstromwerte derjenigen Wicklungen zusammengefasst werden, in denen dieselbe Lastflussrichtung vorliegt.

7. Verfahren nach Anspruch 5 oder 6,
**dadurch gekennzeichnet, dass**

- nur solche Wicklungen des Transformators bei der Bildung der Hilfsgröße berücksichtigt werden, in denen ein Mitsystemstrom vorliegt, dessen Höhe eine Minimalschwelle überschreitet.

8. Anordnung (40) zum Erkennen eines Windungsfehlers in einem Transformator (41) eines elektrischen Energieversorgungsnetzes, mit

- einer Messeinrichtung (45), die zur Erfassung von phasenleiterbezogenen Strommesswerten auf der Oberspannungsseite (A) und der Unterspannungsseite (B) des Transformators (41) eingerichtet ist; und mit
- einer Auswerteinrichtung (46), die zur Bestimmung von jeweiligen Gegensystemstromwerten für die Oberspannungsseite (A) und die Unterspannungsseite (B) aus den phasenleiterbezogenen Strommesswerten und zur Erzeugung eines Fehlersignals eingerichtet ist, wenn unter Verwendung der Gegensystemstromwerte ein Windungsfehler in dem Transformator (41) erkannt worden ist;
wobei
- die Auswerteinrichtung (46) dazu eingerichtet ist, unter Verwendung einer Abfolge von Gegensystemstromwerten der Oberspannungsseite (A) und einer Abfolge von zeitlich zugehörigen Gegensystemstromwerten der Unterspannungsseite (B) eine Hilfsgröße zu bilden, anhand der Hilfsgröße eine Entscheidung zu treffen, ob ein Windungsfehler in dem Transformator (41) vorliegt, und ein Fehlersignal zu erzeugen, wenn ein Windungsfehler vorliegt;
**dadurch gekennzeichnet, dass**
- die Auswerteinrichtung (46) dazu eingerichtet ist, die Hilfsgröße als Integral über das Produkt jeweils zeitlich einander zugeordneter Gegensystemstromwerte der Ober- (A) und der Unterspannungsseite (B) zu bilden.

**Claims**

1. Method for identifying a winding fault in a transformer (41) of an electrical power supply grid, in which

- phase conductor-related current measurement values are detected on the high-voltage side (A) and the low-voltage side (B) of the transformer (41);
- negative-phase-sequence system current values are determined in each case for the high-voltage side (A) and the low-voltage side (B) from the phase conductor-related current measurement values; and
- a fault signal is generated when a winding fault in the transformer (41) has been identified using the negative-phase-sequence system current values; wherein
- an auxiliary variable is formed using a sequence of negative-phase-sequence system current values of the high-voltage side (A) and a sequence of temporally associated negative-phase-sequence system current values of the low-voltage side (B); and
- the auxiliary variable is used to make a decision as to whether a winding fault is present in the transformer (41); and
- the fault signal is generated when a winding fault is present;
**characterized in that**
- the auxiliary variable is formed as integral over the product of respectively temporally associated negative-phase-sequence system current values of the high-voltage side (A) and the low-voltage side (B).

2. Method according to Claim 1,
**characterized in that**

- the arithmetic sign of the auxiliary variable is taken into consideration in order to decide on the presence of a winding fault.

3. Method according to either of the preceding claims, **characterized in that**

- in the event that the auxiliary variable indicates the absence of a winding fault, an asymmetry of phase conductor-related differential currents is taken into consideration; and
- the presence of a winding fault is identified when an asymmetry is present.

4. Method according to one of the preceding claims, **characterized in that**

- the fault signal is blocked when a switching-on process in the power supply grid or when the presence of an external fault has been identified.

5. Method according to one of the preceding claims, **characterized in that**

- in the case of a transformer (81) having more than two windings, in order to form the auxiliary variable, the negative-phase-sequence system current values of a respective further winding are added either to the negative-phase-sequence system current values of the high-voltage side of the transformer or to the negative-phase-sequence system current values of the low-voltage side of the transformer.

6. Method according to Claim 5,
**characterized in that**

- when forming the auxiliary variable, the negative-phase-sequence system current values of those windings which have the same load flow direction are combined.

7. Method according to Claim 5 or 6,
**characterized in that**

- when forming the auxiliary variable, consideration is given only to those windings of the transformer in which a positive-phase-sequence system current whose level exceeds a minimum threshold is present.

8. Arrangement (40) for identifying a winding fault in a transformer (41) of an electrical power supply grid, having

- a measurement device (45), which is configured to detect phase conductor-related current measurement values on the high-voltage side (A) and the low-voltage side (B) of the transformer (41); and having
- an evaluation device (46), which is configured to determine respective negative-phase-sequence system current values for the high-voltage side (A) and the low-voltage side (B) from the phase conductor-related current measurement values and to generate a fault signal when a winding fault in the transformer (41) has been identified using the negative-phase-sequence system current values;
wherein
- the evaluation device (46) is configured to form an auxiliary variable using a sequence of negative-phase-sequence system current values of the high-voltage side (A) and a sequence of temporally associated negative-phase-sequence system current values of the low-voltage side (B), to use the auxiliary variable to make a decision as to whether a winding fault is present in the transformer (41) and to generate a fault signal when a winding fault is present;
**characterized in that**
- the evaluation device (46) is configured to form the auxiliary variable as integral over the product of respectively temporally associated negative-phase-sequence system current values of the high-voltage side (A) and the low-voltage side (B).

**Revendications**

1. Procédé pour reconnaître un défaut de spire dans un transformateur (41) d'un réseau d'alimentation en énergie électrique, dans lequel

- on relève des valeurs de mesure de courant rapportées aux conducteurs de phase du côté (A ) de tension haute et du côté (B ) de tension basse du transformateur (41) ;
- à partir des valeurs de mesure de courant rapportées aux conducteurs de phase, on détermine des valeurs de courant de système inverse, respectivement pour le côté (A) de tension haute et le côté (B) de tension basse ; et

- on produit un signal de défaut, si, en utilisant les valeurs de courant de système inverse, il a été reconnu un défaut de spire dans le transformateur (41) ; dans lequel

- en utilisant une suite de valeurs de courant de système inverse du côté (A) de haute tension et une suite de valeurs de courant de système inverse en fonction du temps du côté (B) de basse tension, on forme une grandeur auxiliaire ; et

- à l'aide de la grandeur auxiliaire, on décide s'il y a un défaut de spire dans le transformateur (41) ; et

- on produit un signal de défaut, s'il y a un défaut de spire ;

**caractérisé en ce que**

- on forme la grandeur auxiliaire sous la forme d'une intégrale sur le produit des valeurs de courant de système inverse, associées l'une à l'autre en fonction du temps, du côté (A) de tension haute et du côté (B) de tension basse.

2.  Procédé suivant la revendication 1,
    **caractérisé en ce que**

    - pour décider de l'existence d'un défaut de spire, on considère le signe de la grandeur auxiliaire.

3.  Procédé suivant l'une des revendications précédentes, **caractérisé en ce que**

    - dans le cas où la grandeur auxiliaire indique l'absence d'un défaut de spire, on considère une dissymétrie de courant de différence rapportée aux conducteurs de phase ; et
    - on reconnait la présence d'un défaut de spire, s'il y une dissymétrie.

4.  Procédé suivant l'une des revendications précédentes, **caractérisé en ce que**

    - on bloque un signal de défaut, s'il a été reconnue une opération de mise en circuit du réseau d'alimentation en énergie ou l'existence d'un défaut extérieur.

5.  Procédé suivant l'une des revendications précédentes, **caractérisé en ce que**

    - pour un transformateur (81) ayant plus de deux enroulements, on additionne, pour la formation de la grandeur auxiliaire, les valeurs de courant de système inverse d'un autre enroulement, respectivement, soit aux valeurs de courant de système inverse du côté de tension haute du transformateur, soit aux valeurs de courant de système inverse du côté de tension basse du transformateur.

6.  Procédé suivant la revendication 5,
    **caractérisé en ce que**

    - pour la formation de la grandeur auxiliaire, on rassemble les valeurs de courant de système inverse des enroulements dans lesquels il y a la même direction de flux de charge.

7.  Procédé suivant la revendication 5 ou 6,
    **caractérisé en ce que**

    - on ne prend en compte, dans la formation de la grandeur auxiliaire, que des enroulements du transformateur dans lesquels il y a un courant de système direct, dont le niveau dépasse un seuil minimum.

8.  Agencement (40) pour la reconnaissance d'un défaut de spire dans un transformateur (41) d'un réseau d'alimentation en énergie électrique, comprenant

    - un dispositif (45) de mesure, qui est conçu pour le relevé de valeurs de mesure de courant se rapportant aux conducteurs de phase du côté (A) de haute tension et du côté (B) de basse tension du transformateur (41) ; et comprenant
    - une unité (46) d'exploitation, qui est conçue pour la détermination de valeurs respectives de courant de système inverse pour le côté (A) de haute tension et le côté (B) de basse tension, à partir des valeurs de mesure du courant rapportées aux conducteurs de phase et pour la production d'un signal de défaut, si, en utilisant des valeurs de courant de système inverse, il a été reconnu un défaut de spire dans le transformateur (41) ; dans lequel

- le dispositif (46) d'exploitation est conçu pour former, en utilisant une suite de valeurs de courant de système inverse du côté (A) de tension haute et une suite de valeurs de courant de système inverse en fonction du temps du côté (B) de tension basse, une grandeur auxiliaire à l'aide de laquelle on décide si il y a un défaut de spire dans le transformateur (41) et on produit un signal de défaut s'il y a un défaut de spire ;

**caractérisé en ce que**

- le dispositif (46) d'exploitation est conçu pour former la grandeur auxiliaire sous la forme d'une intégrale sur le produit des valeurs de courant de système inverse, associées l'une à l'autre en fonction du temps, du côté (A) de tension haute et du côté (B) de tension basse.

## FIG 1

## FIG 2

## FIG 3

## FIG 4

FIG 5

EP 3 595 114 B1



FIG 6

FIG 7

FIG 8

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7812615 B2
- US 7903381 B2